# EUROPÄISCHE PATENTANMELDUNG

(11) **EP 1 214 880 A2**
(43) Veröffentlichungstag der Anmeldung: **19.06.2002**
(21) Anmeldenummer: 01128402.3
(22) Anmeldetag: 04.12.2001
(51) Int. Cl.: A01N 37/00, A01N 37/06, B27K 3/02, B27K 3/08, B27K 3/36

(54) **Holz mit fixierter Sorbinsäure oder Sorbinsäuresalzen**

(30) Priorität: 16.12.2000 DE 10062984
(71) Anmelder: Nutrinova Nutrition Specialties & Food Ingredients GmbH, 65929 Frankfurt am Main (DE)
(72) Erfinder: Raczek, Nico N., Dr., 65779 Kelkheim (DE); Sälzer, Katrin, 63538 Gross-Krotzenburg (DE)
(74) Vertreter: Schweitzer, Klaus, Dr.

(57) **Zusammenfassung**

Die vorliegende Erfindung betrifft Holz, welches ein Sorbinsäuredepot enthält, sowie Verfahren zur Herstellung des Sorbinsäuredepots im Holz oder auf der Oberfläche des Holzes. Die vorliegende Erfindung betrifft auch ein Verfahren zur Verwendung von Sorbinsäure und ihrer Salze zum Schutz von Holz vor mikrobiologisch bedingtem Abbau.

## Beschreibung

### Holz mit fixierter Sorbinsäure oder Sorbinsäuresalzen

Die vorliegende Erfindung betrifft Holz, welches ein Sorbinsäuredepot enthält, sowie Verfahren zur Herstellung des Sorbinsäuredepots im Holz oder auf der Oberfläche des Holzes. Die vorliegende Erfindung betrifft auch ein Verfahren zur Anwendung von Sorbinsäure und ihrer Salze zum Schutz von Holz vor mikrobiologisch bedingten Abbau. Dies betrifft insbesondere Holz, welches besonderen Witterungsbedingungen unterliegt; Holz, welches in Berührung mit Lebensmitteln, Bedarfsgegenständen, Futtermitteln, Haustierfutter, kosmetischen Mitteln, Lebensmittelabfällen kommen kann oder im häuslichen Außen- oder Wohnbereich zur Anwendung gelangt. Diese Erfindung betrifft insbesondere die Herstellung eines Depots im Holz durch dauerhafte Fixierung der Sorbinsäure im Holz und sichert damit eine lang andauernde Wirkung. Neben der industriellen Anwendung bei Ver- und Bearbeitung von Holz ist auch die Anwendung im handwerklichen Bereich möglich.

Unter "Sorbaten" werden im folgenden Sorbinsäure und ihre Salze verstanden.

Unter "Holz" wird im folgenden die Gesamtheit der vom Kambium der Pflanzen nach innen abgegliederten Dauergewebe, unabhängig vom Verholzungsgrad, verstanden. Mark, Rinde und Borke zählen nicht zum Holz.

Holz unterliegt wie alle organischen Materialien einem mikrobiologisch bedingten Abbau. Neben Basidiomyceten (Ständerpilzen) tragen auch Schimmelpilze, Hefen und auch Bakterien dazu bei. In der Holzindustrie kommen verschiedenste Holzschutzmittel zur Anwendung. Häufig sind die Inhaltsstoffe dieser Holzschutzmittel Substanzen, die mit einem erheblichen Gesundheitsrisiko verbunden sind, beispielsweise Fluorverbindungen wie Ammoniumhydrogenfluorid, Kupferhexafluorsilikat oder Kaliumhydrogenfluorid, Arsenverbindungen wie Arsenpentoxid, Borverbindungen wie Borsäure oder Polybor, oder Kupferverbindungen wie Kupfersulfat. Häufig verwendete Chromverbindungen wie Kaliumchromat oder Ammoniumdichromat sind allerdings keine Biozide im eigentlichen Sinne, da diese der Fixierung der Biozide im Holz dienen.

Nachteil der genannten Holzschutzmittel ist, dass sie nach Gefahrstoffverordnung als giftig oder zumindest gesundheitsschädlich einzustufen sind. Viele der genannten Holzschutzmittel sind geruchsneutral, so dass ihr Vorhandensein so nicht bemerkt werden kann. In vielen Fällen sind die Verbraucher oder Verwender eines so behandelten Holzes auch an deren verändertes Aussehen (z.B. Grünverfärbung) so gewöhnt, so dass eine Behandlung mit einem Holzschutzmittel nicht beachtet wird. Trotz der notwendigen Arbeitschutzmaßnahmen bei der Anwendung solcher Holzschutzmittel im industriellen Bereich ist der Verwender eines so behandelten Holzes häufig nicht über die möglichen gesundheitlichen Risiken des direkten Kontakts mit dem so behandelten Holz informiert. Bei dauerndem direktem Kontakt mit diesem Holz ist das Risiko gesundheitlicher Spätschäden nicht auszuschließen.

Im Gegensatz zu der Anwendung solcher Holzschutzmittel im industriellen Bereich ist die handwerkliche Anwendung im Haus- und Heimbereich deshalb problematisch.

Besonders strenge Maßstäbe sind insbesondere für mit Holzschutzmitteln behandeltes Holz anzulegen, welches mit Lebensmittel, Bedarfsgegenständen, Futtermitteln, Haustierfutter, kosmetischen Mitteln oder Lebensmittelabfällen in Berührung kommen kann. Hierbei besteht immer die Möglichkeit eines direkten Überganges in die Lebensmittel. Ein solcher Übergang muss bei nicht zum Verzehr geeigneten oder sogar toxischen Stoffen aber unbedingt vermieden werden, um gesundheitliche Risiken auszuschließen.

Konservierungsstoffe, die zur Haltbarmachung von verschiedenen Lebensmitteln eingesetzt werden, wurden auch auf ihre Anwendbarkeit zur Konservierung von Holz geprüft, insbesondere in Form von Derivaten, die als solche nicht zur Lebensmittelkonservierung verwendet werden. Das wasserunlösliche Zinksalz der Sorbinsäure wurde beispielsweise als wirkungslos (Holzforschung 17, 97 (1963)) beschrieben. Die Behandlung von Bambus mit dem kommerziell nicht erhältlichen Natriumsorbat zeigten in der Regel bereits nach wenigen Tagen Befall mit Pilzen und schlechtere Resultate als die alternativ geprüfte Dehydracetsäure. Lediglich bei dem Praxis unüblichen pH-Wert 3,0 war Natriumsorbat in diesen Untersuchungen wirksam (Nikai Sueyoshi, Bericht Nr. 7).

In der Praxis werden Lebensmittelkonservierungsstoffe und ihre Derivate nicht als Holzschutzmittel verwendet, da sie bisher als unzureichend wirksam angesehen wurden. Im Gegensatz zu den in der Technik verwendeten Holzschutzmitteln sind die in der Lebensmittelverarbeitung eingesetzten Konservierungsstoffe aber gesundheitlich unbedenklich, so dass der Übergang von Spuren auf Lebensmittelverpackungen eher als bei technischen Holzschutzmitteln tolerierbar wäre. Außerdem sind sie geruchsneutral, so dass von ihnen keine geruchlichen Beeinträchtigungen von Lebensmitteln ausgehen. Das gilt ganz besonders für Sorbinsäure, die strukturell den in Nahrungsfetten vorkommenden Fettsäuren eng verwandt ist und in gleicher Weise wie diese Fettsäuren im Stoffwechsel des Körpers abgebaut wird.

Sorbinsäure und insbesondere ihre wasserlöslichen Salze sind im Gegensatz zu bisherigen Annahmen durchaus in der Lage, Holz und Holzgegenstände für längere Zeit vor holzschädlichen Pilzen zu schützen. Diese Schutzwirkung wird erreicht, obwohl allgemein darauf hingewiesen wird, dass Sorbinsäure und ihre Salze nur bei saurem pH-Wert des zu konservierenden Gutes wirksam sind (siehe beispielsweise: Handbuch Lebensmittelzusatzstoffe, Abschnitt B II-1.2, S. 3, 1997).

Sorbinsäure (trans, trans-2.4-Hexadiensäure) ist eine farblose, feste Verbindung, die sich nur wenig in kaltem Wasser löst. Die Löslichkeit in flüssigen Alkoholen ist dagegen gut. Kaliumsorbat ist eine fast farblose Verbindung, die sich sehr gut in Wasser löst. Sorbinsäure und seine Salze besitzen eine sehr gute mikrobiostatische, antimykotische Wirkung. Gleichzeitig ist Sorbinsäure als ungesättigte Fettsäure praktisch ungiftig, welches sehr umfangreiche Daten belegen. Sorbinsäure und ihre Salze sind von internationalen Gremien entsprechend für die Verwendung in Lebensmitteln freigegeben und weltweit als Konservierungsstoff für den direkten Zusatz zu Lebensmitteln zugelassen. Die international festgelegte vertretbare Tagesdosis für den Menschen von bis zu 25 mg/kg Körpergewicht entspricht einer vertretbaren Aufnahme durch den Erwachsenen von bis zu 1,5 g je Tag (bei einem mittleren Körpergewicht von 60 kg).

Bei der Anwendung von Sorbinsäure und ihren Salzen ist es erforderlich, eine ausreichend hohe Konzentration an der Holzoberfläche und in seinen Randbereichen zu erreichen. Holz wird im allgemeinen nie ganz trocken verwendet und es besitzt einen seiner Umgebung angepassten Restfeuchtegehalt. Vor einer Behandlung mit Holzschutzmittel werden Hölzer daher im allgemeinen getrocknet. Verbliebenes Wasser ist in die Zellwände eingelagert und behindert daher das Vordringen einer Sorbatlösung in den Holzkapillaren nicht. Eine Tauch- oder Sprühbehandlung erlaubt, bereits bei lufttrockenem Holz für den oberflächlichen Schutz ausreichende Mengen an Sorbaten in das Holz einzubringen.

In Abhängigkeit vom Feuchtegehalt kann Sorbinsäure aber langsam weiter in die Zellwände hinein und auch hindurch diffundieren. Je mehr Feuchtigkeit bereits im Holz ist, desto leichter und tiefer verteilt sich Sorbinsäure in den tieferen Schichten des Holzes. Bei einer starken Diffusion in die Tiefe des Holzes kann das im Extremfall dazu führen, dass die Konzentration an Sorbaten in dem durchtränkten Holzbereich so gering wird, dass keine ausreichende Holzschutzwirkung mehr erreicht wird. Wenn Holz, das mit Sorbaten behandelt wurde, für einige Zeit Wasser ausgesetzt wird, z. B. Regen oder aus feuchter Luft kondensierendem Wasser, so können die Sorbate auch wieder ausgewaschen werden. Dadurch vermindert sich die Schutzwirkung oder sie geht sogar ganz verloren.

Die Erfindung bezweckt durch Modifizierung der Sorbinsäurebehandlung das Herausdiffundieren oder Auswaschen der Sorbinsäure oder der Salze der Sorbinsäure zu verhindern. Aufgabe der vorliegenden Erfindung ist es daher bei der Verwendung von Sorbaten als Holzschutzmittel sicherzustellen, dass ausreichend gegen Pilze wirksame Konzentrationen in den äußeren Schichten des Holzes verbleiben.

Überraschenderweise wurde nun gefunden, dass durch die Erzeugung von schwerlöslichen, stabilen Sorbinsäuresalzen direkt im Holz diese Aufgabe gelöst werden konnte. Silber-, Kupfer-, Quecksilber-, Blei-, Aluminium-, Chrom-, Eisen- oder Zinnsalze der Sorbinsäure, vorzugsweise aber Calcium- und Magnesiumsorbat, lagern sich relativ fest an die Holzzellen und bilden dadurch ein Depot, das einerseits die Diffusion der Sorbate in tiefere Holzschichten und andererseits das Auswaschen verhindert. Depotformen der Sorbinsäure im Holz können aber auch durch Verdrängen von Wasser durch Öl im Holz erreicht werden oder durch Sorbinsäure selbst, wobei organische oder anorganische Säuren eingesetzt werden.

Die Erfindung betrifft daher Holz, enthaltend ein Sorbinsäuredepot.

Die Erfindung betrifft auch ein Holz, das dadurch gekennzeichnet ist, dass das Sorbinsäuredepot ein Silber-, Kupfer-, Quecksilber-, Blei-, Aluminium-, Chrom-, Eisen-, Zinn-, Calcium- oder Magnesiumsalz der Sorbinsäure ist oder eine Mischung einer oder mehrerer der genannten Salze ist. Bevorzugt ist ein Calcium- oder Magnesiumsalz der Sorbinsäure.

Die Erfindung betrifft auch ein Holz, das dadurch gekennzeichnet ist, dass das Sorbinsäuredepot aus einer organischen oder anorganischen Säure und der Sorbinsäure besteht. Bevorzugt sind organische Säuren wie Citronensäure, Fumarsäure oder Milchsäure.

Die Erfindung betrifft ferner ein Holz, das dadurch gekennzeichnet ist, dass das Sorbinsäuredepot aus einem Öl und Sorbinsäure und/oder einem oder mehreren Salzen der Sorbinsäure besteht.
Bevorzugt wird ein Öl aus Ölfrüchten eingesetzt, worin die Sorbinsäure und/oder ein oder mehrere Salze der Sorbinsäure gelöst vorliegen.
Geeignete Öle sind beispielsweise Olivenöl, Ölpalmenöl, Avocadoöl, Rapsöl, Leinöl, Flachsöl, Sojaöl, Baumwollöl, Erdnussöl, Sonnenblumenöl, Kürbisöl, Rizinusöl, Mohnöl, Sesamöl, Kokosnussöl, Kakaoöl, Mandelöl, Walnussöl, Haselnussöl, Traubenkernöl, Maisöl oder Mischungen der genannten Öle.

Die Erfindung betrifft ferner ein Verfahren zur Herstellung eines Sorbinsäuredepots, das dadurch gekennzeichnet ist, dass man
a) Holz mit einer Lösung, enthaltend ein oder mehrere wasserlösliche Silber-, Kupfer-, Quecksilber-, Blei-, Aluminium-, Chrom-, Eisen-, Zinn-, Calcium- oder Magnesiumsalze, behandelt,
b) das so behandelte Holz trocknet und
c) das getrocknete Holz mit Sorbinsäure und/oder einem oder mehreren Salzen der Sorbinsäure behandelt.

Bei dem erfindungsgemäßen Verfahren geht man so vor, dass zunächst eine wässrige Lösung eines Silber-, Kupfer-, Quecksilber-, Blei-, Aluminium-, Chrom-, Eisen-, Zinn-, Calcium- oder Magnesiumsalzes hergestellt wird. Diese Lösung wird im folgenden als Fixierlösung bezeichnet. Geeignete Salze sind beispielsweise CaCl₂, MgSO₄, CaHPO₄, Ca(OH)₂, MgCl₂, FeCl₃, FeSO₄, AlCl₃, Al(H₂PO₄)₃, Pb(NO₃)₂ oder Pb(CH₃COO)₂. Bevorzugt werden hierbei Calcium- oder Magnesiumsalze in der Fixierlösung eingesetzt. Es können auch Mischungen der verschiedenen Salzen hergestellt werden. Danach wird das Holz mit der Fixierlösung behandelt. Geeignet sind alle Verfahren, mit denen die Oberfläche des Holzes oder der Holzgegenstände gleichmäßig mit der Fixierlösung benetzt werden kann, also beispielsweise Tauchen, Besprühen, Bestreichen und andere. Die Konzentration der Salze in der Fixierlösung wird auf das vorgesehene Behandlungsverfahren abgestimmt. Die Konzentrationen können grundsätzlich in weiten Grenzen variieren und werden nach oben nur durch die Löslichkeitsgrenze, nach unten durch die bei zu geringer Konzentration für die Herstellung des entsprechenden Sorbats begrenzt. Geeignete Konzentration der Salze in der Fixierlösung sind bevorzugt 0,1 - 10,0 Gew.-%, besonders bevorzugt 1,0 - 5-0 Gew.-%.

Für besonders intensive Schutzwirkung kann an die Stelle einer einfachen Tauchbehandlung auch eine Druckimprägnierung oder eine Imprägnierung nach vorhergehender Evakuierung treten, jeweils mit der genannten Fixierlösung.

Nach der Behandlung mit der Fixierlösung reicht in der Regel einfaches Abtrocknen des so behandelten Holzes an trockener Luft aus, um das Holz für den nächsten Verfahrensschritt vorzubereiten. Alternativ ist natürlich auch eine beschleunigte Trocknung in beheizten Räumen oder Kammern oder in einem warmen oder trockenen Luftstrom möglich.

Anschließend erfolgt die Behandlung mit Sorbinsäure und/oder einem oder mehreren Salzen der Sorbinsäure. Geeignet sind alle obengenannten Verfahren, mit denen die Oberfläche des Holzes oder der Holzgegenstände gleichmäßig mit der Sorbinsäure benetzt werden kann. Die Konzentrationen an Sorbinsäure und/oder Salzen der Sorbinsäure werden auf das vorgesehene Behandlungsverfahren abgestimmt. Sie können grundsätzlich in weiten Grenzen variieren und werden nach oben nur durch die Löslichkeitsgrenze, nach unten durch die bei zu geringer Konzentrationen nur noch geringe Schutzwirkung begrenzt. Üblicherweise kommen Lösungen der Salze in Wasser, oder Alkoholen, wie verzweigten oder unverzweigten C₁-C₄-Alkanolen und/oder C₂-C₄-Alkandiolen oder Mischungen aus diesen Alkoholen mit Wasser, insbesondere wässrigem Propylenglykol mit bevorzugten Konzentrationen im Bereich von 5 Gew.-% bis 50 Gew.-%, insbesondere im Bereich von 10 Gew.-% bis 40 Gew.-% zum Einsatz.

Für besonders intensive Schutzwirkung kann an die Stelle einer einfachen Tauchbehandlung auch eine Druckimprägnierung oder eine Imprägnierung nach vorhergehender Evakuierung treten, jeweils mit Lösungen der Sorbinsäure und/oder der Sorbinsäuresalze in Wasser oder Gemischen aus Wasser und Propylenglykol.

Nach der Behandlung mit Sorbinsäure reicht in der Regel einfaches Abtrocknen an trockener Luft aus, um die gewünschte Schutzwirkung zu erreichen. Alternativ ist natürlich auch eine beschleunigte Trocknung in beheizten Räumen oder Kammern oder in einem warmen oder trockenen Luftstrom möglich.

Die Verfahrensschritte a) und c) können auch vertauscht werden. Dann werden jedoch höhere Konzentrationen der Salze in der Fixierlösung benötigt.

Die so fixierten Sorbate lagern sich relativ fest an die Holzzellen und bilden dadurch ein Depot, das einerseits die Diffusion der Sorbate in tiefere Holzschichten und andererseits das Auswaschen verhindert. Niedrige pH-Werte (insbesondere von pH 1 bis pH 4), beeinflussen die Fixierungsgeschwindigkeit günstig. Auch durch eine kurzzeitige, nachträgliche Heißdampfbehandlung kann sie erheblich erhöht werden.

Die Behandlung erfolgt vorzugsweise an den zur Weiterverarbeitung bestimmten Holzteilen, damit die gesamte Oberfläche gleichmäßig in Kontakt mit der Fixierlösung und der Sorbinsäure und/oder den Salzen der Sorbinsäure kommt. Sie kann aber auch an fertigen Holzgegenständen vorgenommen werden, wenn die Form den Kontakt der gesamten Oberfläche mit den Lösungen ermöglicht.

Die Erfindung betrifft auch ein Verfahren zur Herstellung eines Sorbinsäuredepots, das dadurch gekennzeichnet ist, dass man
a) Holz mit einer Lösung, enthaltend eine oder mehrere von Sorbinsäure verschiedene organische oder anorganische Säuren, behandelt,
b) das so behandelte Holz trocknet und
c) das getrocknete Holz mit Sorbinsäure und/oder einem oder mehreren Salzen der Sorbinsäure behandelt.

Beispiele für verwendbare organische Säuren sind Ameisensäure, Essigsäure, Propionsäure, Citronensäure, Fumarsäure oder Milchsäure. Bevorzugt sind Citronensäure, Fumarsäure und Milchsäure. Als anorganische Säuren können beispielsweise Salz-, Schwefel- oder Phosphorsäure eingesetzt werden. Die Säuren werden bevorzugt in Konzentrationen von 0,1- 10,0 Gew.-%, besonders bevorzugt 1,0 - 5,0 Gew.-% (bezogen auf die Lösung) eingesetzt. Sorbinsäure, bzw. deren Salze werden zweckmäßigerweise in Konzentrationen 1 bis 10 Gew.-% verwendet.

Dieses erfindungsgemäße Verfahren ermöglicht die Fixierung der Sorbinsäure, wenn nicht mit brennbaren Lösemitteln gearbeitet werden kann. Dabei kommen organische und/oder anorganischer Säuren zum Einsatz, die zusammen mit wässrigen Lösungen von Salzen der Sorbinsäure in der bei der Fixierlösung beschriebenen Weise zur Voroder Nachbehandlung des Holzes verwendet werden. Dabei fällt Sorbinsäure aus der eingesetzten Sorbinsäurelösung bzw. des Salzes der Sorbinsäure im behandelten Holz aus. Es kommen die obengenannten bei der Fixierlösung genannten Behandlungsmöglichkeiten des Holzes zur Einbringung der Säuren ins Holz zum Einsatz.

Die Verfahrensschritte a) und c) können auch vertauscht werden. Dann werden jedoch höhere Konzentrationen der Säuren benötigt.

Die Erfindung betrifft darüber hinaus auch ein Verfahren zur Herstellung eines Sorbinsäuredepots, das dadurch gekennzeichnet ist, dass man Holz mit einem Öl, enthaltend Sorbinsäure und/oder einem oder mehreren Salzen der Sorbinsäure, behandelt.

Geeignet sind beispielsweise Öle von Ölfrüchten, worin die Sorbinsäure und/oder ein oder mehrere Salze der Sorbinsäure gelöst vorliegen.
Geeignete Öle sind Olivenöl, Ölpalmenöl, Avocadoöl, Rapsöl, Leinöl, Flachsöl, Sojaöl, Baumwollöl, Erdnussöl, Sonnenblumenöl, Kürbisöl, Rizinusöl, Mohnöl, Sesamöl, Kokosnussöl, Kakaoöl, Mandelöl, Walnussöl, Haselnussöl, Traubenkernöl, Maisöl oder Mischungen der genannten Öle.
Die Konzentration der Sorbinsäure oder Sorbinsäuresalze beträgt von 0,1 Gew.-% bis 1 Gew.-%.

Es kommen die obengenannten schon bei der Fixierlösung genannten Behandlungsmöglichkeiten des Holzes zur Einbringung oder Aufbringung des Öls ins Holz zum Einsatz.

Die Erfindung betrifft auch die Verwendung eines Sorbinsäuredepots zum Schutz von Holz vor einem mikrobiologisch bedingten Abbau, insbesondere vor einem Abbau durch Pilze wie Basidiomyceten, Schimmelpilze oder Hefen.

Die Erfindung wird durch die folgenden Beispiele erläutert:

### Beispiel 1

Fichtenholzbretter wurden durch Lagerung bei definierter Umgebungsfeuchte auf eine Feuchte von 9,3 Gew.%, 18,8 Gew.% und 19,4 Gew.% eingestellt. Die Feuchte wurde gravimetrisch bestimmt.
Es kamen zwei Verfahrensvarianten zum Einsatz:

### Variante A

Die Behandlung erfolgte mit einer wässrigen Lösung, die 5 Gew.% eines Fixiermittels enthielt. Das Holz wurde in die Fixierlösung für 15 min getaucht. Dann wurde das Holz ca. 5 - 10 min getrocknet. Danach wurde das so behandelte Holz in eine Lösung von Kaliumsorbat in Wasser (5 Gew.-%) für 15 min getaucht.

### Variante B

In der Variante B wurde die Reihenfolge der Fixierlösung und der Kaliumsorbatlösung vertauscht.

Anschließend wurden die Sorbinsäure-Gehalte in einer Schicht von etwa 2 mm Tiefe gemessen. Es wurden die folgenden Ergebnisse erhalten:

### Variante A

Sorbinsäurekonzentrationen in g/m² Holzoberfläche

| | Feuchte (%) | | |
|---|---|---|---|
| | 9,3% | 18,8% | 19,4% |
| Fixiermittel | Sorbinsäuremenge (g/m²) | | |
| CaCl₂ | 24 | 34 | 31 |
| MgSO₄ | 23 | 23 | 23 |
| Citronensäure | 37 | 40 | 38 |
| Milchsäure | 25 | 28 | 33 |

### Variante B

Sorbinsäuremenge in g/m² Holzoberfläche

| | Feuchte (%) | | |
|---|---|---|---|
| | 9,3 % | 18,8 % | 19,4% |
| Fixiermittel | Sorbinsäure (g/m²) | | |
| CaCl₂ | 13 | 14 | 11 |
| MgSO₄ | 14 | -- | -- |
| Citronensäure | 13 | 17 | 18 |
| Milchsäure | 9 | 12 | 14 |

Es zeigte sich, dass bei vorheriger Anwendung von Fixiermittellösungen deutlich höhere Mengen an Sorbinsäure bzw. Sorbat auf das Holz gebracht werden können.

## Patentansprüche

1. Holz, **dadurch gekennzeichnet, dass** es ein Sorbinsäuredepot enthält.

2. Holz gemäß Anspruch 1, **dadurch gekennzeichnet, dass** das Sorbinsäuredepot ein Silber-, Kupfer-, Quecksilber-, Blei-, Aluminium-, Chrom-, Eisen-, Zinn-, Calcium- oder Magnesiumsalz der Sorbinsäure ist oder eine Mischung einer oder mehrerer der genannten Salze ist.

3. Holz gemäß Anspruch 2, **dadurch gekennzeichnet, dass** das Sorbinsäuredepot ein Calcium- oder Magnesiumsalz der Sorbinsäure ist.

4. Holz gemäß Anspruch 1, **dadurch gekennzeichnet ist, dass** das Sorbinsäuredepot aus einer von Sorbinsäure verschiedenen organischen oder anorganischen Säure und der Sorbinsäure besteht.

5. Holz gemäß Anspruch 4, **dadurch gekennzeichnet, dass** die organische Säure Ameisensäure, Essigsäure, Propionsäure, Citronensäure, Fumarsäure oder Milchsäure ist.

6. Holz gemäß Anspruch 4, **dadurch gekennzeichnet, dass** die anorganische Säure Salzsäure, Schwefelsäure oder Phosphorsäure ist.

7. Holz gemäß Anspruch 1, **dadurch gekennzeichnet, dass** das Sorbinsäuredepot aus einem Öl und Sorbinsäure und/oder einem oder mehreren Salzen der Sorbinsäure besteht.

8. Holz gemäß Anspruch 7, **dadurch gekennzeichnet, dass** ein Öl von Ölfrüchten wie Olivenöl, Ölpalmenöl, Avocadoöl, Rapsöl, Leinöl, Flachsöl, Sojaöl, Baumwollöl, Erdnussöl, Sonnenblumenöl, Kürbisöl, Rizinusöl, Mohnöl, Sesamöl, Kokosnussöl, Kakaoöl, Mandelöl, Walnussöl, Haselnussöl, Maisöl, Traubenkernöl eingesetzt wird oder Mischungen der genannten Öle eingesetzt werden

9. Verfahren zur Herstellung eines Sorbinsäuresdepots gemäß einem oder mehreren der Ansprüche 1 bis 3, **dadurch gekennzeichnet, dass** man
a) Holz mit einer Lösung, enthaltend ein oder mehrere wasserlösliche Silber-, Kupfer-, Quecksilber-, Blei-, Aluminium-, Chrom-, Eisen-, Zinn-, Calcium- oder Magnesiumsalze, behandelt,
b) das so behandelte Holz trocknet und
c) das getrocknete Holz mit Sorbinsäure und/oder einem oder mehreren Salzen der Sorbinsäure behandelt.

10. Verfahren gemäß Anspruch 9, **dadurch gekennzeichnet, dass** eine wässrige Lösung von CaCl₂, MgSO₄, CaHPO₄, Ca(OH)₂, MgCl₂, FeCl₃, FeSO₄, AlCl₃, Al(H₂PO₄)₃, Pb(NO₃)₂ oder Pb(CH₃COO)₂ eingesetzt wird.

11. Verfahren gemäß der Ansprüche 9 oder 10, **dadurch gekennzeichnet, dass** eine Lösung, enthaltend eine oder mehrere Salze der Sorbinsäure in Wasser oder Alkoholen wie verzweigten oder unverzweigten C₁-C₄-Alkanolen und/oder C₂-C₄-Alkandiolen oder Mischungen aus diesen Alkoholen oder Alkanole mit Wasser, eingesetzt wird.

12. Verfahren gemäß einem oder mehreren der Ansprüche 9 bis 11, **dadurch gekennzeichnet, dass** eine Lösung von Propylenglykol in Wasser eingesetzt wird.

13. Verfahren gemäß einem oder mehreren der Ansprüche 9 bis 12, **dadurch gekennzeichnet, dass** ein oder mehrere der Sorbinsäuresalze mit einer Konzentration von 5 Gew.-% bis 50 Gew.-%, insbesondere von 10 Gew.-% bis 40 Gew.-%, eingesetzt werden.

14. Verfahren gemäß einem oder mehreren der Ansprüche 9 bis 13, **dadurch gekennzeichnet, dass** die Verfahrensschritte a) und c) in umgekehrter Reihenfolge durchgeführt werden.

15. Verfahren zur Herstellung eines Sorbinsäuredepots gemäß der Ansprüche 4, 5 und 6, **dadurch gekennzeichnet, dass** man
a) Holz mit einer Lösung, enthaltend eine oder mehrere organische oder anorganische Säuren, behandelt,
b) das so behandelte Holz trocknet und
c) das getrocknete Holz mit Sorbinsäure und/oder einem oder mehreren Salzen der Sorbinsäure behandelt.

16. Verfahren gemäß Anspruch 15, **dadurch gekennzeichnet, dass** eine oder mehrere organische Säuren wie Citronensäure, Fumarsäure oder Milchsäure eingesetzt werden.

17. Verfahren gemäß einem oder mehreren der Ansprüche 15 bis 16, **dadurch gekennzeichnet, dass** die Verfahrensschritte a) und c) in umgekehrter Reihenfolge durchgeführt werden.

18. Verfahren zur Herstellung eines Sorbinsäuredepots gemäß der Ansprüche 7 und 8, **dadurch gekennzeichnet, dass** man Holz mit einem Öl, enthaltend Sorbinsäure und/oder einem oder mehreren Salzen der Sorbinsäure, behandelt.

19. Verfahren gemäß Anspruch 18, **dadurch gekennzeichnet, dass** Sorbinsäure und/oder ein oder mehrere Salze der Sorbinsäure gelöst in einem oder mehreren Ölen von Ölfrüchten wie Oliven, Ölpalme, Avocado, Raps, Lein, Flachs, Soja, Baumwolle, Erdnuss, Sonnenblumen, Kürbis, Rinizinus, Mohn, Sesam, Kokosnuss, Kakao, Mandel, Walnuss, Haselnuss, Traubenkern, Mais oder Mischungen der genannten Öle, vorliegen.

20. Verfahren gemäß der Ansprüche 18 oder 19, **dadurch gekennzeichnet, dass** die Konzentration der Sorbinsäure oder Sorbinsäuresalze von 0,1 Gew.-% bis 1 Gew.-% beträgt.

21. Verwendung eines Sorbinsäuredepots, herstellbar gemäß einem oder mehreren der Ansprüche 9 bis 20, zum Schutz von Holz vor einem mikrobiologisch bedingten Abbau.

22. Verwendung gemäß Anspruch 21 zum Schutz von Holz vor einem Abbau durch Pilze wie Basidiomyceten, Schimmelpilze oder Hefen.
